# EUROPEAN PATENT SPECIFICATION

(11) **EP 3 901 725 B1**
(45) Date of publication and mention of the grant of the patent: **20.08.2025**
(21) Application number: 21169113.4
(22) Date of filing: 19.04.2021
(51) Int. Cl.: G01S 17/931, G05D 1/00

(54) **METHOD OF AND SYSTEM FOR DETECTING PRESENCE OF RUTS ON CURRENT TERRAIN**
VERFAHREN UND SYSTEM ZUR ERKENNUNG DES VORHANDENSEINS VON SPURRINNEN AUF EINEM AKTUELLEN GELÄNDE
PROCÉDÉ ET SYSTÈME DE DÉTECTION DE LA PRÉSENCE D'ORNIÈRES SUR LE TERRAIN ACTUEL

(30) Priority: 23.04.2020 RU 2020114575
(43) Date of publication of application: 27.10.2021
(73) Proprietor: Y. E. Hub Armenia LLC, 0002 Yerevan (AM)
(72) Inventor: ORLOV, Vsevolod Nikolaevich, 140181 Zhukovskiy, Moskovskaya oblast (RU)
(74) Representative: Pribic, Jelena

(56) References cited:
- US-A1- 2015 253 775
- US-A1- 2016 334 798
- US-A1- 2019 023 320

## Description

### FIELD OF TECHNOLOGY

The present technology relates to self-driving cars and, specifically, to a method of and a system for detecting presence of road ruts on a current terrain to control operation of self-driving cars.

### BACKGROUND

Several computer-based navigation systems that are configured for aiding navigation and/or control of vehicle have been proposed and implemented in the prior art. These systems range from more basic map-aided localization-based solutions - i.e. use of a computer system to assist a driver in navigating a route from a starting point to a destination point; to more complex ones - computer-assisted and/or driver-autonomous driving systems.

Some of these systems are implemented as what is commonly known as a "cruise control" system. Within these systems, the computer system boarded on the vehicles maintains a user-set speed of the vehicle. Some of the cruise control system implement an "intelligent distance control" system, whereby the user can set up a distance to a potential car in front (such as, select a value expressed in a number of vehicles) and the computer system adjusts the speed of the vehicle at least in part based on the vehicle approaching the potential vehicle in front within the pre-defined distance. Some of the cruise control systems are further equipped with a collision control system, which systems upon detection of the vehicle (or other obstacle) in front of the moving vehicle, slow down or stop the vehicle.

Some of the more advanced system provide for a fully autonomous driving of the vehicle without direct control from the operator (i.e. the driver), so-called Self-Driving Cars (SDCs). A given SDC includes computer systems that can cause the SDC to accelerate, brake, stop, change lane and self-park.

One of the technical challenges in implementing the above computer systems is planning an SDC operation when approaching a turn.

United States Patent Application Publication No. 2016/334798 assigned to CNH Industrial America LLC et al., entitled "Bump Detection and Effect Reduction in Autonomous Systems" published on November 17, 2016, discloses a control system for a base station that includes a first transceiver configured to receive a first signal and send a second signal to an agricultural vehicle. The first signal indicates at least an acceleration of the vehicle, a current velocity of the vehicle, and a location relative to a terrain where the vehicle experienced the acceleration, and the second signal indicates a vehicle target velocity. The control system includes a controller configured to determine a bump severity value based on the acceleration and the current velocity of the vehicle, mark an area indicative of the bump on a map of the terrain when the bump severity value exceeds a threshold, and automatically generate the second signal when the vehicle enters the area. The target velocity is based on a proximity of the vehicle to the bump, the bump severity value, or some combination thereof.

### SUMMARY

It is an object of the present technology to ameliorate at least some of the shortcomings or inconveniences present in the prior art. Embodiments of the present technology may provide and/or broaden the scope of approaches to methods of achieving the aims and objects of the present technology.

Typically, a Self-Driving Car (SDC) is equipped with an electronic device and various sensors. The sensors are configured to generate data about the surroundings of the SDC, and the electronic device is configured to receive, and process, this data in a variety of ways for the purpose of safely operating the SDC in its surroundings. For example, the sensors may generate sensor data indicative of *inter alia:* (i) various object features of objects in the proximity of the SDC (e.g., object type, size, position relative to the SDC, color, speed, acceleration, and the like), and (ii) various terrain features of a terrain on which the SDC is travelling (e.g., surface features, presence of roads, geometry of roads, presence of lanes, geometry of lanes, and the like). This sensor data is then employed by the electronic device for controlling operation of the SDC in order to avoid collisions between the SDC and potential objects in its surroundings, and so that the SDC operates in accordance with the traffic rules.

Developers of the present technology have realized that, under normal conditions, for safety purposes, the SDC ought to be travelling along a "default" reference path that corresponds to the center-line of a current road (or a current lane of the road). In one example, a midpoint of the rear axle of the SDC may be used as a reference point between the SDC and the center-line of the current road for ensuring that the SDC is travelling along its center-line.

Developers of the present technology have realized that this default reference path for the SDC may be represented by a plurality of anchor points (e.g., positional points on the current road/lane) that are sequentially located on the center-line of the current road/lane and which the SDC ought to follow while operating on the current road. Developers of the present technology have also devised an electronic device that may be configured to continuously verify whether the SDC is currently following the default reference path. In addition, the electronic device may be configured to take action, under certain conditions, for modifying the default reference path for safety purposes.

Developers of the present technology have also devised methods and systems for using data indicative of a current (and/or default) reference path for generating a current trajectory for the SDC for controlling operation of the SDC, such that the SDC is actually travelling along the current reference path on the given road. For example, the electronic device may be configured to use the current reference path for generating current trajectory data indicative of a variety of operation-control parameters of the SDC, at different (future) moments in time, that allow the vehicle to actually travel from one anchor point of the current reference path to a next anchor point of the current reference path, and so forth. Such operation-control parameters may include, but are not limited to: steering wheel position at a respective moment in time, speed at a respective moment in time, acceleration at a respective moment in time, braking at a respective moment in time, and the like.

In at least some embodiments of the present technology, if the sensor data is indicative of the presence of an object (obstacle) along a current reference path and/or current trajectory of the SDC, the electronic device may employ the sensor data for modifying the current reference path and/or the current trajectory of the SDC so as to reduce the risk of collision.

However, developers of the present technology have realized that, in addition to objects in the proximity of the SDC, the terrain itself on which the SDC is travelling may increase the risk of collision and/or the risk of losing control of the SDC during operation. For instance, some terrains may be somewhat uneven, due to presence of potholes and/or bumps, which makes it difficult for the electronic device to control operation of the SDC on such terrains.

The terrain on which the SDC is travelling may be a road with so-called "road ruts". Broadly speaking, a road rut is a depression and/or groove-like channel worn into the road by continuous travel of wheels or skis thereon. Road ruts can be formed by wear, such as due to studded snow tires common in cold climate areas, for example, or they can be formed due to the deformation of the asphalt concrete pavement and/or subbase material. One other possible reason for road rut formation is presence of heavy-vehicle traffic on the road, which exerts more pressure on the road than what has been assumed during the construction of the road.

It should be noted that road ruts may prevent rainwater from flowing to the side of the road into ditches or gutters provided for that purpose. Rainwater trapped in road ruts is a common contributing factor to "hydroplaning" crashes. Severe road ruts can also significantly impede steering when a vehicle is being steered out of the road rut.

Developers of the present technology have devised methods and systems configured to (i) detect presence of ruts on a current terrain on which the SDC is travelling (e.g., road ruts on a current road on which the SDC is travelling), and in response, (ii) modify the current reference path and/or the current trajectory of the SDC so as to avoid the ruts. In one example, avoiding the ruts may refer to controlling operation of the SDC such that tires of the SDC are not steered into the ruts during operation. In another example, avoiding the ruts may refer to controlling operation of the SDC such that the amount of time or instances that the tires of the SDC spend in the ruts is reduced. In a further example, avoiding the ruts may refer to controlling operation of the SDC such that the SDC performs a lane-changing manoeuvre, if possible, so as to reduce the risk of the tires of the SDC to be steered into the ruts during operation.

The developers of the presence technology have devised methods and systems for modifying a current reference path and/or the current trajectory of the SDC so as to avoid road ruts on the given road if the presence of road ruts on the given road is detected.

In further embodiments of the present technology, the developers of the present technology have devised methods and systems for detecting presence of ruts on a current terrain. Also, some methods and systems have been devised to, in response to detecting the presence of ruts on the current terrain, (i) generate an adjusted reference path for avoiding the detected ruts, (ii) generate an adjusted trajectory based on the adjusted reference path, and/or (iii) take action for avoiding the ruts on the current terrain so as to increase safety of SDC passengers and/or to reduce the risk of collision with other objects on the current terrain and/or to reduce the risk of losing control of the SDC on the current terrain during operation.

In a first broad aspect of the present technology, there is provided a method of detecting presence of ruts on current terrain. A Self-Driving Car (SDC) is travelling on the current terrain. The SDC is associated with a sensor and an electronic device. The sensor is configured to generate sensor data. The sensor data is indicative of at least a surface of the current terrain. The method is executable by the electronic device. The method comprises using, by the electronic device, the sensor data for generating a current terrain profile. The current terrain profile represents a height variation of the surface of the current terrain along its width, the current terrain profile has a pair of current grooves potentially indicative of the presence of the ruts on the current terrain. The method comprises acquiring, by the electronic device from a storage, a sampled terrain profile. The sampled terrain profile represents a height variation of a surface of a given terrain along its width. The sampled terrain profile has a pair of sampled grooves indicative of a presence of the ruts on the given terrain. The method comprises using, by the electronic device, the current terrain profile and the sampled terrain profile for generating comparison data. The comparison data is indicative of a similarity between the current terrain profile and the sampled terrain profile. The method comprises using, by the electronic device, the comparison data for detecting the presence of the ruts on the current terrain.

According to the invention, the current terrain is a current road. The current terrain profile is a current road profile of the current road. The given terrain is a given road. The sampled terrain profile is a sampled road profile of the given road. The ruts re road ruts caused by vehicle traffic.

In some embodiments of the method, the method is executed during operation of the SDC.

In some embodiments of the method, the sensor is a LIDAR sensor, and the sensor data includes point-cloud data indicative of at least the surface of the current road.

In some embodiments of the method, the using the sensor data for generating the current road profile comprises applying, by the electronic device, a RANSAC algorithm onto the point-cloud data for generating the current road profile.

In some embodiments of the method, the storage is configured to store a plurality of sampled road profiles. The sampled road profiles from the plurality of road profiles have at least one of: different spacings between respective pairs of sampled grooves, and different depths of the respective pairs of sampled grooves.

In some embodiments of the method, the using the current road profile and the sampled road profile for generating the comparison data comprises: applying, by the electronic device, a relationship evaluation method for comparing the current road profile against the sampled road profile thereby yielding the comparison data.

In some embodiments of the method, the relationship evaluation method is a correlation-type method.

In some embodiments of the method, the relationship evaluation method is a covariation-type method.

In some embodiments of the method, the comparison data includes a covariation peak having a height. The height of the covariation peak is indicative of how similar depths of the pair of current grooves are to depths of the pair of sampled grooves.

In some embodiments of the method, the using the comparison data for detecting the presence of the road ruts on the current road comprises: using, by the electronic device, the height of the covariation peak for determining the presence of the road ruts on the current road.

According to the invention, the method further comprises, upon detecting the presence of the road ruts on the current road, controlling, by the electronic device, operation of the SDC so as to avoid the road ruts on the current road.

In some embodiments of the method, the controlling the operation of the SDC so as to avoid the road ruts on the current road comprises modifying, by the electronic device, at least one of a current reference path and a current trajectory of the SDC on the current road, thereby generating at least one of a respective modified reference path and a respective modified trajectory for the SDC on the current road. The current reference path and the current trajectory of the SDC on the current road are aligned with a center-line of the current road. The modified reference path and the modified trajectory of the SDC on the current road are not aligned with the center-line of the current road so as to avoid the road ruts on the current road.

In some embodiments of the method, the method further comprises, upon detecting the presence of the road ruts on the current road: (i) determining, by the electronic device, depth of the road ruts on the current road based on the height of the covariation peak, (ii) accessing, by the electronic device from the storage, a table indicative of a safety threshold speed associated with the depth of the road ruts, (iii) acquiring, by the electronic device, a current speed of the vehicle, and (iv) in response to the current speed being above the safety threshold speed, controlling, by the electronic device, operation of the SDC so as to at least one of: reduce the current speed of the vehicle, and perform a lane-changing maneuver if the current road has more than one lane.

In some embodiments of the method, the method further comprises, upon detecting the presence of the road ruts on the current road using, by the electronic device, the comparison data for determining the position of the road ruts on the current road. The method further comprises using, by the electronic device, the position of the road ruts for modifying at least one of a current reference path and a current trajectory of the SDC on the current road thereby generating at least one of a respective modified reference path and a modified trajectory for the SDC on the current road. The current reference path and the current trajectory of the SDC on the current road are aligned with a center-line of the current road. The modified reference path and the modified trajectory of the SDC on the current road are not aligned with the center-line of the current road such that wheel position of the SDC do not correspond to the position of the road ruts on the current road.

In a second broad aspect of the present technology, there is provided an electronic device for detecting presence of ruts on current terrain. A Self-Driving Car (SDC) is travelling on the current terrain. The SDC is associated with a sensor. The sensor is configured to generate sensor data. The sensor data is indicative of at least a surface of the current terrain. The electronic device is configured to use the sensor data for generating a current terrain profile. The current terrain profile represents a height variation of the surface of the current terrain along its width. The current terrain profile has a pair of current grooves potentially indicative of the presence of the ruts on the current terrain. The electronic device is configured to acquire, from a storage, a sampled terrain profile. The sampled terrain profile represents a height variation of a surface of a given terrain along its width. The sampled terrain profile has a pair of sampled grooves indicative of a presence of the ruts on the given terrain. The electronic device is configured to use the current terrain profile and the sampled terrain profile for generating comparison data. The comparison data is indicative of a similarity between the current terrain profile and the sampled terrain profile. The electronic device is configured to use the comparison data for detecting the presence of the ruts on the current terrain.

According to the invention, the current terrain is a current road, and the current terrain profile is a current road profile of the current road. The given terrain is a given road, the and a sampled terrain profile is a sampled road profile of the given road. The ruts are road ruts caused by vehicle traffic.

In some embodiments of the electronic device, the electronic device is configured to use the comparison data during operation of the SDC.

In some embodiments of the electronic device, the sensor is a LIDAR sensor, and the sensor data includes point-cloud data indicative of at least the surface of the current road.

In some embodiments of the electronic device, the electronic device configured to use the sensor data for generating the current road profile comprises the electronic device configured to apply a RANSAC algorithm onto the point-cloud data for generating the current road profile.

In some embodiments of the electronic device, the storage is configured to store a plurality of sampled road profiles. The sampled road profiles from the plurality of road profiles have at least one of: different spacings between respective pairs of sampled grooves, and different depths of the respective pairs of sampled grooves.

In some embodiments of the electronic device, the electronic device configured to use the current road profile and the sampled road profile for generating the comparison data comprises the electronic device configured to apply a relationship evaluation method for comparing the current road profile against the sampled road profile thereby yielding the comparison data.

In some embodiments of the electronic device, the relationship evaluation method is a correlation-type method.

In some embodiments of the electronic device, the relationship evaluation method is a covariation-type method.

In some embodiments of the electronic device, the comparison data includes a covariation peak having a height. The height of the covariation peak is indicative of how similar depths of the pair of current grooves are to depths of the pair of sampled grooves.

In some embodiments of the electronic device, the electronic device configured to use the comparison data for detecting the presence of the road ruts on the current road comprises the electronic device configured to use the height of the covariation peak for determining the presence of the road ruts on the current road.

According to the invention, the electronic device is further configured to, upon detecting the presence of the road ruts on the current road, control operation of the SDC so as to avoid the road ruts on the current road.

In some embodiments of the electronic device, the electronic device configured to control the operation of the SDC so as to avoid the road ruts on the current road comprises the electronic device configured to modify at least one of a current reference path and a current trajectory of the SDC on the current road, thereby generating at least one of a respective modified reference path and a respective modified trajectory for the SDC on the current road. The current reference path and the current trajectory of the SDC on the current road are aligned with a center-line of the current road. The modified reference path and the modified trajectory of the SDC on the current road are not aligned with the center-line of the current road so as to avoid the road ruts on the current road.

In some embodiments of the electronic device, the electronic device is further configured to, upon detecting the presence of the road ruts on the current road: (i) determine depth of the road ruts on the current road based on the height of the covariation peak, (ii) access, from the storage, a table indicative of a safety threshold speed associated with the depth of the road ruts, (iii) acquire a current speed of the vehicle, (iv) in response to the current speed being above the safety threshold speed, control operation of the SDC so as to at least one of: reduce the current speed of the vehicle, and perform a lane-changing maneuver if the current road has more than one lane.

In some embodiments of the electronic device, the electronic device is further configured to, upon detecting the presence of the road ruts on the current road, use the comparison data for determining the position of the road ruts on the current road. The electronic device is further configured to use the position of the road ruts for modifying at least one of a current reference path and a current trajectory of the SDC on the current road thereby generating at least one of a respective modified reference path and a modified trajectory for the SDC on the current road. The current reference path and the current trajectory of the SDC on the current road are aligned with a center-line of the current road. The modified reference path and the modified trajectory of the SDC on the current road are not aligned with the center-line of the current road such that wheel position of the SDC do not correspond to the position of the road ruts on the current road.

In the context of the present specification, a "server" is a computer program that is running on appropriate hardware and is capable of receiving requests (e.g. from client devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices and client devices, however it is not required to be the case with respect to the present technology. Thus, some (non-limiting) examples of electronic devices include personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices. The use of the expression "an electronic device" does not preclude multiple client devices being used in receiving/sending, carrying out or causing to be carried out any task or request, or the consequences of any task or request, or steps of any method described herein.

In the context of the present specification, "client device" is any computer hardware that is capable of running software appropriate to the relevant task at hand. In the context of the present specification, in general the term "client device" is associated with a user of the client device. Thus, some (non-limiting) examples of client devices include personal computers (desktops, laptops, netbooks, etc.), smart phones, and tablets, as well as network equipment such as routers, switches, and gateways It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, etc.

In the context of the present specification, the expression "software component" is meant to include software (appropriate to a particular hardware context) that is both necessary and sufficient to achieve the specific function(s) being referenced.

In the context of the present specification, the expression "computer information storage media" (also referred to as "storage media") is intended to include media of any nature and kind whatsoever, including without limitation RAM, ROM, disks (CD-ROMs, DVDs, floppy disks, hard drivers, etc.), USB keys, solid state-drives, tape drives, etc. A plurality of components may be combined to form the computer information storage media, including two or more media components of a same type and/or two or more media components of different types.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first database" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware components, in other cases they may be different software and/or hardware components.

Implementations of the present technology each have at least one of the above-mentioned object and/or aspects, but do not necessarily have all of them. It should be understood that some aspects of the present technology that have resulted from attempting to attain the above- mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects and advantages of the present technology will become better understood with regard to the following description, appended claims and accompanying drawings where:
Figure 1 depicts a schematic diagram of an example computer system for implementing certain embodiments of systems and/or methods of the present technology.
Figure 2 depicts a networked computing environment suitable for use with some implementations of the present technology.
Figure 3 depicts a birds-eye view representation of the vehicle of Figure 2 during operation and a reference path for the vehicle on a current terrain not having ruts, in accordance with at least some embodiments of the present technology.
Figure 4 depicts a birds-eye view representation of the vehicle of Figure 2 during operation and a reference path for the vehicle on an other current terrain potentially having road ruts, in accordance with at least some embodiments of the present technology.
Figure 5 depicts a current road profile of the other current terrain, a sampled road profile of a given terrain having road ruts, and comparison data between the current road profile and the sampled road profile, in accordance with at least some embodiments of the present technology.
Figure 6 depicts a birds-eye view representation of the vehicle of Figure 2 during operation and a modified reference path for the vehicle on the other current terrain having been generated upon detecting presence of the ruts on the other current terrain, in accordance with at least some embodiments of the present technology.

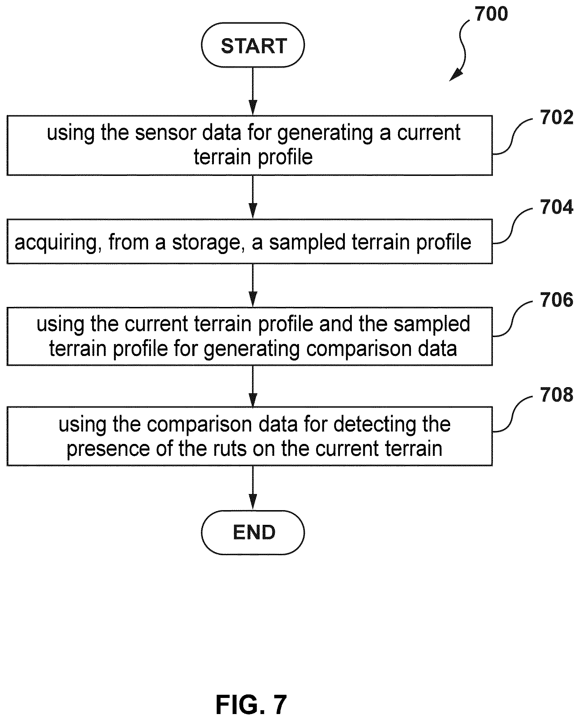

Figure 7 is a schematic block diagram of detecting presence of ruts on a current terrain, in accordance with at least some embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology.

Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labelled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

### Computer System

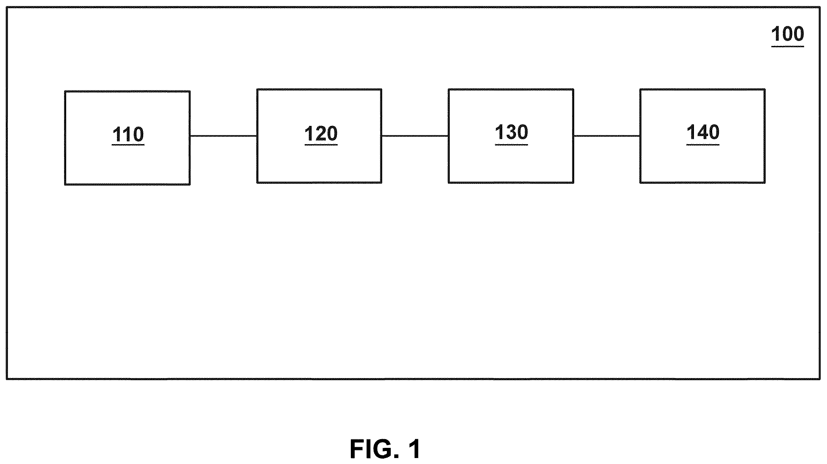

Referring initially to Figure 1, there is depicted a computer system 100 suitable for use with some implementations of the present technology, the computer system 100 comprising various hardware components including one or more single or multi-core processors collectively represented by processor 110, a solid-state drive 120, a memory 130, which may be a random-access memory or any other type of memory. Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled.

In at least some embodiments of the present technology, the solid-state drive 120 stores program instructions suitable for being loaded into the memory 130 and executed by the processor 110 for determining a presence of an object. For example, the program instructions may be part of a vehicle control application executable by the processor 110.

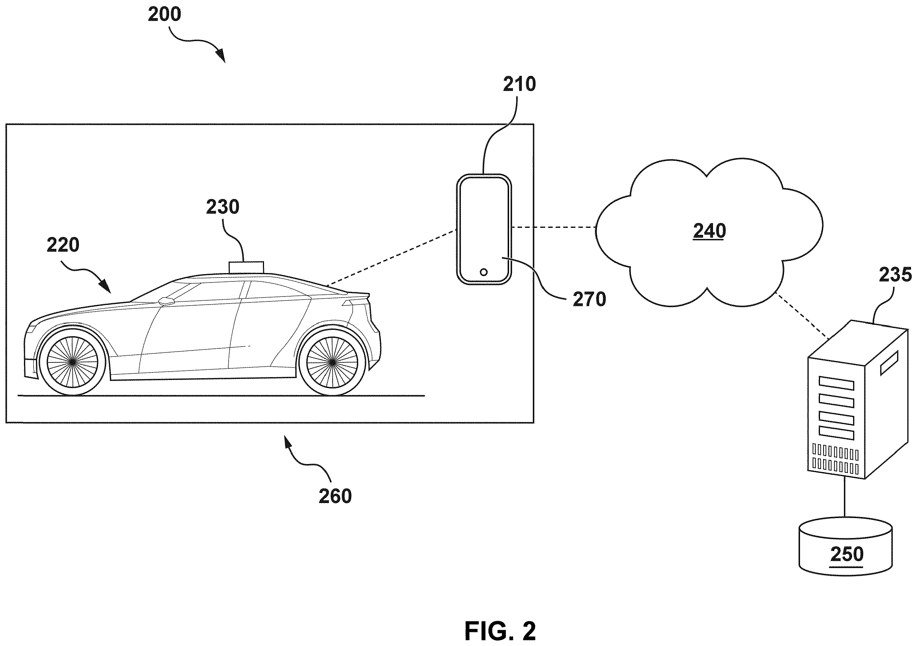

In at least some embodiments of the present technology, it is contemplated that the computer system 100 may have additional and/or optional components, such as a network communication module 140 for communication, via a communication network (for example, a communication network 240 depicted in Figure 2) with other electronic devices and/or servers, localization modules (not depicted), and the like.

### Networked Computer Environment

Figure 2 illustrates a networked computer environment 200 suitable for use with some embodiments of the systems and/or methods of the present technology. The networked computer environment 200 comprises an electronic device 210 associated with a vehicle 220, or associated with a user (not depicted) who can operate the vehicle 220, a server 235 in communication with the electronic device 210 via the communication network 240 (e.g. the Internet or the like, as will be described in greater detail herein below). Optionally, the networked computer environment 200 can also include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220, with which the electronic device 210 is associated, may comprise any leisure or transportation vehicle such as a private or commercial car, truck, motorbike or the like. The vehicle may be user operated or a driver-less vehicle. It should be noted that specific parameters of the vehicle 220 are not limiting, these specific parameters including: vehicle manufacturer, vehicle model, vehicle year of manufacture, vehicle weight, vehicle dimensions, vehicle weight distribution, vehicle surface area, vehicle height, drive train type (e.g. 2x or 4x), tyre type, brake system, fuel system, mileage, vehicle identification number, and engine size.

The implementation of the electronic device 210 is not particularly limited, but as an example, the electronic device 210 may be implemented as a vehicle engine control unit, a vehicle CPU, a vehicle navigation device (e.g. TomTom^{™}, Garmin^{™}), a tablet, and a personal computer built into the vehicle 220 and the like. Thus, it should be noted that the electronic device 210 may or may not be permanently associated with the vehicle 220. Additionally or alternatively, the electronic device 210 can be implemented in a wireless communication device such as a mobile telephone (e.g. a smart-phone or a radio-phone). In certain embodiments, the electronic device 210 has a display 270.

The electronic device 210 may comprise some or all of the components of the computer system 100 depicted in Figure 1. In certain embodiments, the electronic device 210 is on-board computer device and comprises the processor 110, solid-state drive 120 and the memory 130. In other words, the electronic device 210 comprises hardware and/or software and/or firmware, or a combination thereof, for determining a trajectory of the vehicle 220 at a given road segment considering obstacles therein, as will be described in greater detail below.

### Sensor system

According to the invention, the electronic device 210 comprises or has access to a sensor system 230. The sensor system 230 may comprise a plurality of sensors allowing for various implementations of the present technology. Examples of the plurality of sensors include but are not limited to: cameras, LIDAR sensors, and RADAR sensors, etc. The sensor system 230 is operatively coupled to the processor 110 for transmitting the so-captured information to the processor 110 for processing thereof, as will be described in greater detail herein below.

The sensor system 230 can be mounted on an interior, upper portion of a windshield of the vehicle 220, but other locations are within the scope of the present disclosure, including on a back window, side windows, front hood, rooftop, front grill, or front bumper of the vehicle 220. In some non-limiting embodiments of the present technology, the sensor system 230 can be mounted in a dedicated enclosure (not depicted) mounted on the top of the vehicle 220.

Further, the spatial placement of the sensor system 230 can be designed taking into account the specific technical configuration thereof, configuration of the enclosure, weather conditions of the area where the vehicle 220 is to be used (such as frequent rain, snow, and other elements) or the like.

In the non-limiting embodiments of the present technology, the sensor system 230 may comprise a sensor configured to capture an image of a surrounding area 260. In this regard the sensor system 230 may be a camera or a plurality thereof (not separately depicted).

How the camera is implemented is not particularly limited. For example, in one specific non-limiting embodiments of the present technology, the camera can be implemented as a mono camera with resolution sufficient to detect objects at pre-determined distances of up to about 30 m (although cameras with other resolutions and ranges are within the scope of the present disclosure).

In some embodiments of the present technology, the camera (or one or more cameras that make up the implementation of the sensor system 230) is configured to capture a pre-determined portion of the surrounding area 260 around the vehicle 220. In some embodiments of the present technology, the camera is configured to capture an image (or a series of images) that represent approximately 90 degrees of the surrounding area 260 around the vehicle 220 that are along a movement path of the vehicle 220.

In other embodiments of the present technology, the camera is configured to capture an image (or a series of images) that represent approximately 180 degrees of the surrounding area 260 around the vehicle 220 that are along a movement path of the vehicle 220. In yet additional embodiments of the present technology, the camera is configured to capture an image (or a series of images) that represent approximately 360 degrees of the surrounding area 260 around the vehicle 220 that are along a movement path of the vehicle 220 (in other words, the entirety of the surrounding area around the vehicle 220).

In a specific non-limiting example, the camera can be of the type available from **FLIR Integrated Imaging Solutions Inc.,** 12051 Riverside Way, Richmond, BC, V6W 1K7, Canada. It should be expressly understood that the camera can be implemented in any other suitable equipment.

In the non-limiting embodiments of the present technology, the sensor system 230 may further comprise a LIDAR instrument (not separately depicted). Lidar stands for **LI**ght **D**etection **a**nd **R**anging. It is expected that a person skilled in the art will understand the functionality of the LIDAR instrument, but briefly speaking, a transmitter (not depicted) of the LIDAR sends out a laser pulse and the light particles (photons) are scattered back to a receiver (not depicted) of the LIDAR instrument. The photons that come back to the receiver are collected with a telescope and counted as a function of time. Using the speed of light (~3X10⁸ m/s), the processor 110 can then calculate how far the photons have travelled (in the round trip). Photons can be scattered back off of many different entities surrounding the vehicle 220, such as other particles (aerosols or molecules) in the atmosphere, other car, stationary objects or potential obstructions in front of the vehicle 220.

In a specific non-limiting example, the LIDAR instrument comprised in the sensor system 230 can be implemented as the LIDAR based sensor that may be of the type available from **Velodyne LiDAR,** Inc. of 5521 Hellyer Avenue, San Jose, CA 95138, United States of America. It should be expressly understood that the LIDAR instrument can be implemented in any other suitable equipment.

In some embodiments of the present technology, the LIDAR instrument comprised in the sensor system 230 can be implemented as a plurality of LIDAR based sensors, such as three, for example, or any other suitable number.

In the non-limiting embodiments of the present technology, the sensor system 230 may further comprise a RAdio Detection And Ranging (RADAR) instrument (not separately depicted). Briefly speaking, the RADAR instrument is a detection instrument using radio waves to determine a range, angle and/or velocity of objects. The RADAR instrument includes a transmitter producing electromagnetic waves, an antenna used for transmitting and receiving electromagnetic waves, a receiver, and a processor to determine properties of the detected objects.

In alternative embodiments of the present technology, there may be a separate antenna for receiving waves, and a separate antenna for transmitting waves. The processor used for determining properties of surrounding objects may be the processor 110.

In some embodiments of the present technology, the RADAR instrument used in the sensor system 230 may comprise long-range, medium-range and short-range RADAR sensors. As a non-limiting example, the long-range RADAR sensor may be used for adaptive cruise control, automatic emergency braking, and forward collision warning, while the medium and short-range RADAR sensors may be used for park assist, cross-traffic alert, junction assist, and blind side detection.

In a specific non-limiting example, the RADAR instrument comprised in the sensor system 230 may be of the type available from **Robert Bosch GmbH** of Robert-Bosch-Platz 1, 70839 Gerlingen, Germany. It should be expressly understood that the RADAR instrument can be implemented in any other suitable equipment.

In some non-limiting embodiments of the present technology, the sensor system 230 may be used, by the processor 110, for image calibration. For example, using an image captured by the camera and the LIDAR point cloud captured by the LIDAR instrument, the processor 110 is configured to identify a given region of the image to correspond to a given region of the LIDAR point cloud captured by the LIDAR instrument. In other embodiments of the present technology, the sensor system 230 are calibrated such that for the image captured by the camera, the LIDAR point cloud captured by the LIDAR instrument, and the RADAR data captured by the RADAR instrument, the processor 110 is configured to identify a given region of the image to correspond to a given region of the LIDAR point cloud and the RADAR data.

In the non-limiting embodiments of the present technology, the vehicle 220 further comprises or has access to other sensors (not separately depicted). The other sensors include one or more of: an inertial measurement unit (IMU), a Global Navigation Satellite System (GNSS) instrument, ground speed RADARs, ultrasonic SONAR sensors, odometry sensors including accelerometers and gyroscopes, mechanical tilt sensors, magnetic compass, and other sensors allowing operation of the vehicle 220.

As a non-limiting example, the IMU may be fixed to the vehicle 220 and comprise three gyroscopes and three accelerometers for providing data on the rotational motion and linear motion of the vehicle 220, which may be used to calculate motion and position of the vehicle 220.

### Communication Network

In some embodiments of the present technology, the communication network 240 is the Internet. In alternative non-limiting embodiments, the communication network 240 can be implemented as any suitable local area network (LAN), wide area network (WAN), a private communication network or the like. It should be expressly understood that implementations of the communication network 240 are for illustration purposes only. How a communication link (not separately numbered) between the electronic device 210 and the communication network 240 is implemented will depend *inter alia* on how the electronic device 210 is implemented. Merely as an example and not as a limitation, in those non-limiting embodiments of the present technology where the electronic device 210 is implemented as a wireless communication device such as a smartphone or a navigation device, the communication link can be implemented as a wireless communication link. Examples of wireless communication links include, but are not limited to, a 3G communication network link, a 4G communication network link, and the like. The communication network 240 may also use a wireless connection with a server 235.

### Server

In some embodiments of the present technology, the server 235 is implemented as a conventional computer server and may comprise some or all of the components of the computer system 100 of Figure 1. In one non-limiting example, the server 235 is implemented as a Dell^{™} PowerEdge^{™} Server running the Microsoft^{™} Windows Server^{™} operating system, but can also be implemented in any other suitable hardware, software, and/or firmware, or a combination thereof. In the depicted non-limiting embodiments of the present technology, the server is a single server. In alternative non-limiting embodiments of the present technology (not shown), the functionality of the server 235 may be distributed and may be implemented via multiple servers.

In some non-limiting embodiments of the present technology, the processor 110 of the electronic device 210 can be in communication with the server 235 to receive one or more updates. The updates can be, but are not limited to, software updates, map updates, routes updates, weather updates, and the like.

In some embodiments of the present technology, the processor 110 can also be configured to transmit to the server 235 certain operational data, such as routes travelled, traffic data, performance data, and the like. Some or all data transmitted between the vehicle 220 and the server 235 may be encrypted and/or anonymized.

### Storage

In Figure 2, there is also depicted a storage 250 communicatively coupled to the server 235. In some embodiments, however, the storage 250 may be communicatively coupled to the electronic device 210 and/or may be implemented within the electronic device 210 and/or may be communicatively coupled to any other processor of the networked computer environment 200.

In at least some embodiments, it is contemplated that the storage 250 may be used by the server 235, the electronic device 210 and/or any other processor of the networked computer environment 200 as a memory device for storing information. The storage 250 is configured to store information extracted, determined and/or generated by the processor 110 of the server 235 and/or the electronic device 210. Generally speaking, the storage 250 may receive data from the processor 110 which was generated by the processor 110 during processing for temporary and/or permanent storage thereof and may provide stored data to the processor 110 for use thereof. It is contemplated that the storage 250 may be split into several distributed storages, for providing a fault-tolerant storage system for example, without departing from the scope of the present technology.

It should be noted that in at least some embodiments of the present technology, the storage 250 may be implemented locally on the electronic device 210 and/or the server 235 (such as on a local memory, for example). It is also contemplated however that the storage 250 may be implemented remotely from the electronic device 210 and/or the server 235 (such as on a remote memory, for example).

### Electronic device

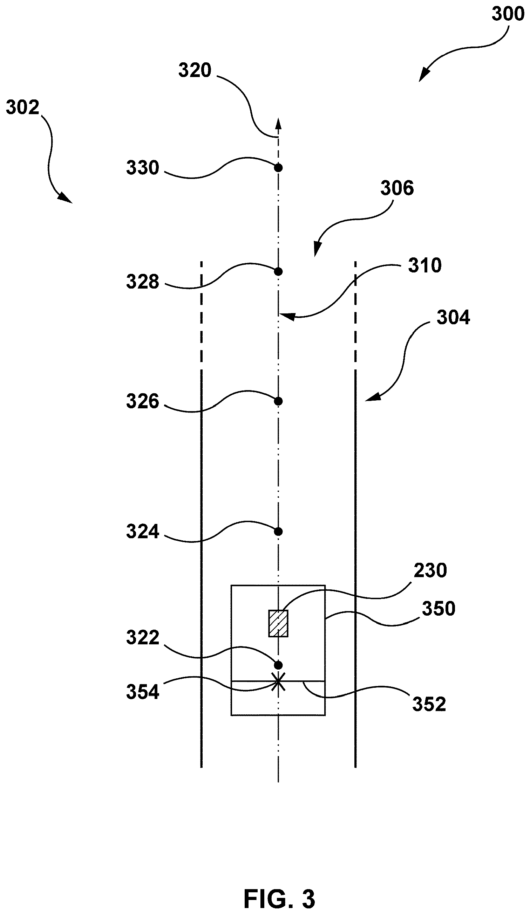

Broadly speaking, the electronic device 210 is configured to *inter alia* control operation or and/or otherwise trigger control of the operation of the vehicle 220 on a current terrain. In one example, the electronic device 210 may be configured to determine operation-control data for controlling operation of the vehicle 220 when the vehicle 220 is travelling on a current road. To better illustrate this, reference will now be made to Figure 3 depicting a birds-eye view representation 300 of the vehicle 220 during operation.

It is contemplated that in at least one non-limiting embodiment of the present technology, the electronic device 210 may be configured to simulate and render the birds-eye view representation 300 on the display 270, for example. However in other non-limiting embodiments of the present technology, the birds-eye view representation 300 is generated for processing purposes only, without any displaying thereof.

In Figure 3, there is depicted a current terrain 302 having a current road 304. The current road 304 has a current lane 306 in which the vehicle 220 is travelling. Therefore, it can be said that the vehicle 220 may be operating on the current terrain 302, and/or on the current road 304, and/or in the current lane 306. While the vehicle 220 is operating, the sensor system 230 may be configured to gather data about the surroundings of the vehicle 220. In some embodiments, it is contemplated that the sensor system 230 may be configured to generate the sensor data indicative of various object features of objects on the current terrain 302 and of various terrain features of the current terrain 302.

In some embodiments, it can also be said that the electronic device 210 may be configured to acquire the sensor data and/or additional data, including road constraint data for generating a simulated representation of the current road 304. It should be noted that road constraint data may take many forms and, as such, may comprise at least one of (i) physical constraints of the current road 304, and (ii) road rule constraints on the current road 304.

Broadly speaking, physical constraints of the current road 304 may include one or more parameters that define geometry of the current road 304. For example, the physical constraints of the current road 304 may include one or more radii of the current road 304 (e.g., that can be used to parametrized a turn associated with the current road 304), one or more distances (such as widths and/or lengths, for example) associated with portions of the current road 304, one or more positions (such as positions of various objects and/or boundaries, for example) associated with the current road 304, one or more angles associated with the current road 304, and the like. In some non-limiting embodiments of the present technology, it is contemplated that data indicative of the physical constraints may be acquired by the electronic device 210 from the sensor system 230, as explained above.

Broadly speaking, road rule constraints of the current road 304 may include one or more road rules that regulate traffic on the current road 304. For example, the road rule constraints may include road signs, one or more lane lines, and the like. In some non-limiting embodiments of the present technology, it is contemplated that data indicative of the road rule constraints may be acquired by the electronic device 210 from the sensor system 230 and/or from the server 235, as explained above.

In some cases, the electronic device 210 may employ data indicative of the road rule constraints and data indicative of the physical constraints in a complementary manner during data processing. For example, data indicative of physical lane boundaries and data indicative of those lane boundaries are provided for regulating traffic in the lane (so as to avoid collisions, for example) may be employed by the electronic device 210 such that the electronic device 210 has access to information regarding (i) a position of a given lane boundary on the current road 304, and (ii) that it is prohibited to cross over the given lane boundary when travelling in that lane.

It is contemplated that the electronic device 210 may be configured to generate the simulated representation of the current road 304 on the current terrain 302 as depicted in Figure 3 at least partially based on the data indicative of constraints of the current road 304. As mentioned above, the current road 304 has the current lane 306, which is defined by left and right boundaries (not numbered). In this example, it can be said that the left boundary and the right boundary of the current lane 306 are part of the constraints of the current road 304 and allow regulating traffic on the current road 304 (and the current terrain 302).

Also depicted in Figure 3 is a bounding box 350 that is a simulated representation of the vehicle 220. It should be noted that the electronic device 210 may be configured to generate the bounding box 350 based on data associated with the vehicle 220, such as data indicative of geometry, configuration, and size of the vehicle 220.

For example, the bounding box 350 depicted in Figure 3 occupies a substantially same area on the simulated representation of the current road 304 as the surface area occupied by the vehicle 220 on the current road 304. In the same example, the electronic device 210 may be configured to generate a simulated representation of a rear axle 352 of the vehicle 220 within the bounding box 350 and a simulated representation of an axle midpoint 354 passing through a midpoint of the rear axle 352 of the vehicle 220.

Hence, it can be said that the electronic device 210 may be configured to generate the simulated representation of the vehicle 220 by generating the bounding box 350, the rear axle 352 and the axle midpoint 354 based on data associated with the vehicle 220. It should be noted that in some embodiments of the present technology, the electronic device 210 may be configured to employ (i) a simulated representation of a front axle with, or instead of, the simulated representation of the rear axle 352, (ii) a simulated representation of an axle midpoint of the front axle, with or instead of, the simulated representation of the axle midpoint 354 in the context of the present technology and depending on *inter alia* the geometry, the configuration (e.g., front wheel drive, rear wheel drive, 4x4) and size of the vehicle 220.

In some embodiments, the electronic device 210 may be configured to implement a bounding box modelling module (not depicted). For example, the bounding box modelling module may be configured to generate the bounding box 350 as described above. In another example, the bounding box modelling module may also be configured to generate a given bounding box for neighbouring vehicles of the vehicle 220 in a similar manner to how the bounding box modelling module is configured to generate the bounding box 350.

In some non-limiting embodiments of the present technology, it is contemplated that the electronic device 210 may be configured to acquire reference path data that is indicative of a reference path 320 depicted in Figure 3. It should be noted that the reference path 320 is a path along the current road 304 that the vehicle 220 should follow. In some cases, the reference path data may be acquired by the electronic device 210 from the server 235, for example. In other cases, the electronic device 210 may be configured to acquire the reference path data by generating the reference path 320.

For example, the electronic device 210 may be configured to generate the reference path 320 by defining a plurality of anchor points (not numbered) along the current road 304. As illustrated, the plurality of anchor points includes anchor points 322, 324, 326, 328, and 330.

In some embodiments, the electronic device 210 may be configured to define anchor points of a given reference path as positional points along a center-line of a lane in which the vehicle 220 is currently travelling. For example, the electronic device 210 may be configured to determine the anchor points 322, 324, 326, 328, and 330 as a plurality of positional points along a center-line 310 of the current lane 306 (and of the current road 304).

It is contemplated that the electronic device 210 may be configured to determine the center-line 310 of the current lane 306 by identifying the center-line 310 as being a midline between the left boundary and the right boundary of the current lane (e.g., based on the constraints of the current road 304) and then may be configured to determine the plurality of anchor points along that midline.

It should be noted that the reference path 320 may sometimes be referred as a "default" reference path of the vehicle 220, since, it is assumed that in normal conditions the vehicle 220 is ought to travel along a center-line of a given lane by default. Indeed, developers of the present technology have realized that in normal conditions, such as for example when the vehicle 220 is travelling along a straight lane, the vehicle 220 ought to be travelling along the center-line of that lane for safety purposes. Put another way, it is assumed that in normal conditions the vehicle 220 ought to be travelling along a current lane such that the axle midpoint 354 is aligned with the center-line 310 of the current lane 306 of the current road 304. In this example, it can be said that the reference path 320 is the default reference path of the vehicle 220 in the current lane 306 and is also the current reference path 320 that the vehicle 220 is following in the current lane 306.

It should be noted that the electronic device 210 may be configured to determine the plurality of anchor points with different distances between the respective anchor points. It is contemplated that distances between the respective anchor points may be pre-selected by the electronic device 210 in different manners for a given application.

In some embodiments of the present technology, the electronic device 210 may implement a lane geometry tracking module (not depicted), or a lane geometry tracker. It is contemplated that the lane geometry tracker of the electronic device 210 may be configured to receive data about the current lane 306 and determine based on that data the center-line 310 of the current lane 306. In some cases, the center-line 310 of the current lane 306 may be calculated by the lane geometry tracker in a form of a polyline having a plurality of vertices. It is contemplated that the plurality of vertices may be used as the plurality of anchor points of a respective default reference path.

It should be noted that, once the reference path 320 is acquired and/or generated by the electronic device 210, the electronic device 210 may be configured to generate a current trajectory for the vehicle 220 on the current road 304 so as to follow the reference path 320. For example, the electronic device 210 may be configured to generate current trajectory data for the vehicle 220 which may then be used by the electronic device 210 for controlling operation of the vehicle 220 so that the vehicle 220 actually travels from one anchor point of the reference path 320 to a next anchor point of the reference path 320, and so forth. For example, the current trajectory data may be indicative of a variety of operation-control parameters of the vehicle 220, at different moments in time, which may allow the vehicle 220 to actually travel from one anchor point to the next anchor point of the reference path 320, and so forth. Such operation-control parameters may be associated with, but not limited to: steering wheel positions, speeds, acceleration, braking, and the like, at different moments in time.

In summary, it can be said that the electronic device 210 may be configured to acquire and/or generate the reference path 320, and based on the reference path 320, may be configured to generate the current trajectory that may be used by the electronic device 210 for allowing the vehicle 220 to actually travel along the reference path 320.

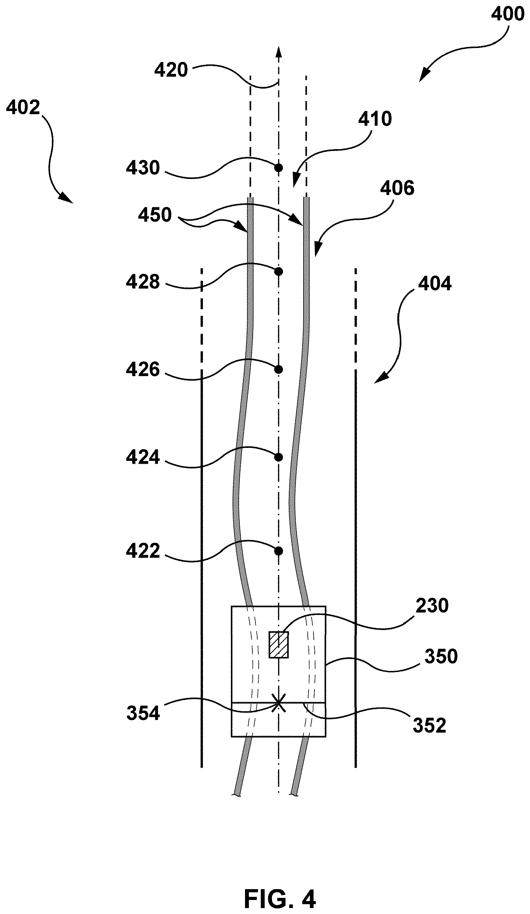

However, developers of the present technology have also realized that travelling along the center-line of a given lane is not always a best and/or safest option for the vehicle 220. To better illustrate this, reference will be made to Figure 4 depicting a birds-eye view representation 400 of the vehicle 220 during operation.

In Figure 4, there is depicted a current terrain 402 having a current road 404. The current road 404 has a current lane 406 in which the vehicle 220 is travelling. The electronic device 210 may be configured to acquire the sensor data and/or additional data, as explained above, for generating a simulated representation of the current road 404.

It should be noted that the current road 404 has so-called "road ruts" 450. Broadly speaking, a road rut is a depression and/or groove-like channel worn into the road by continuous travel of wheels or skis thereon. Road ruts can be formed by wear, such as due to studded snow tires common in cold climate areas, for example, or they can be formed due to the deformation of the asphalt concrete pavement and/or subbase material. One other potential reason for road rut formation is presence of heavy-vehicle traffic on the road, which exerts more pressure on the road than what has been assumed during the construction of the road.

It should be noted that road ruts may prevent rainwater from flowing to the side of the road into ditches or gutters. Rainwater trapped in road ruts is a common contributing factor to "hydroplaning" crashes. Severe road ruts can also significantly impede steering when a vehicle is being steered out of the road rut.

It should be noted that the developers of the present technology have realized that the vehicle 220 should not be travelling along a center-line 410 on the current road 404, as opposed to when travelling on the current road 304, since travelling along the center-line 410 of the current road 404 may result in the vehicle 220 steering into the road ruts 450, which is unsafe. In other words, the vehicle 220 following anchor points 422, 424, 426, 458, and/or 430 of a default/current reference path 420 along the center-line 410 may result in the vehicle 220 steering into the road ruts 450.

Therefore, developers of the present technology have devised methods and systems for detecting presence of the road ruts 450 on the current road 404. As it will become apparent from the description herein further below, in at least some embodiments of the present technology, upon detecting the presence of the road ruts 450 on the current road 404, the electronic device 210 is configured to modify the default/current reference path 420 of the vehicle 220 on the current road 404 and/or the current trajectory of the vehicle 220 on the current road 404, so as to avoid the road ruts 450.

How the electronic device 210 is configured to detect presence of the road ruts 450 on the current road 404 will now be described in greater details. However, it should be noted that the electronic device 210 may be configured to detect presence of ruts on a current terrain in a similar manner.

The electronic device 210 is configured to acquire the sensor data from the sensor system 230. For example, the electronic device 210 may be configured to acquire the sensor data from a LIDAR-based sensor. It is contemplated that the sensor data from the LIDAR-based sensor may include point-cloud data indicative of at least the surface of the current road 404.

According to the invention, the electronic device 210 is configured to process the sensor data for generating a given current road profile for the current road 404. Broadly speaking, a given current road profile is a representation of a height variation of the surface of the current road 404 along its width. In at least some embodiments, the electronic device 210 may be configured to apply a RANSAC algorithm onto the point-cloud data for generating a given current road profile. However, the specific algorithm used by the electronic device 210 for generating a given current road profile based on the sensor data may depend on the specific implementation of the present technology.

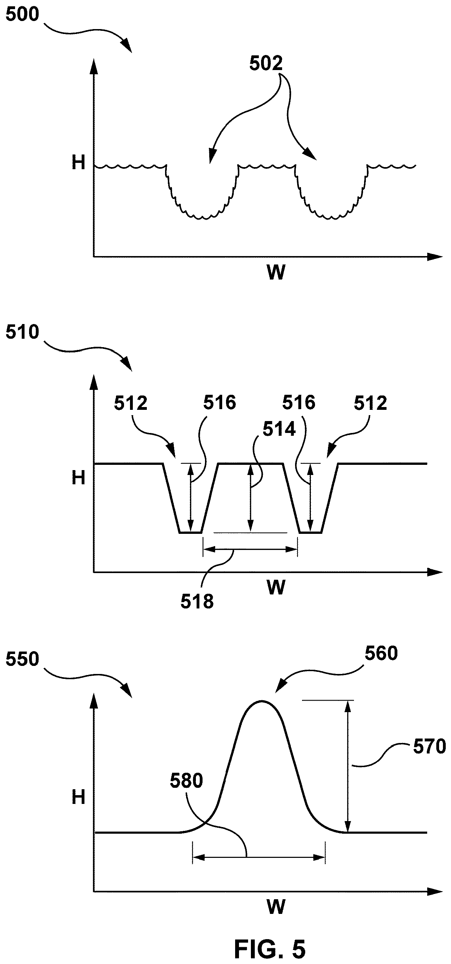

To better illustrate this, reference will now be made to Figure 5 which depicts *inter alia* a current road profile 500 generated by the electronic device 210 based on the sensor data provided by the sensor system 230. As it can be seen, the current road profile 500 of the current road 404 has a pair of current grooves 502.

Recalling that the current road profile 500 represents the height variation of the surface of the current road 404, the current road profile 500 having the pair of current grooves 502 is potentially indicative of the presence of the road ruts 450 on the current road 404. However, it should be noted that the developers of the present technology have realized that the pair of current grooves 502 in the current road profile 500 may be indicative of other surface features of the current road 404 (i.e., other than the road ruts 450). For example, the pair of current grooves 502 may be indicative of potholes and/or other imperfections on the road.

In at least some embodiments of the present technology, developers of the present technology have devised methods and systems for differentiating whether the pair of current grooves 502 is indicative of the presence of the road ruts 450 on the current road 404 or otherwise indicative of some other surface feature of the current road 404. In at least one embodiment of the present technology, this differentiation may be executed by the electronic device 210 comparing the current road profile 500 against a given "sampled" road profile.

Broadly speaking, a given sampled road profile represents a height variation of a surface of a given road along its width and where the given road is *apriori* known to have respective road ruts. For example, the electronic device 210 may be configured to acquire from a given storage (local storage and/or remote storage such as storage 250) a sampled road profile 510 depicted in Figure 5.

The sampled road profile 510 represents a height variation of a surface of the given road along its width. As it can be seen, the sampled road profile 510 has a pair of sampled grooves 512 which, since it is *apriori* known that the given road has road ruts, is indicative of the presence of road ruts on the given road.

It should be noted that the sampled road profile 510 may be associated with a plurality of sample parameters (not numbered). For example, the plurality of sample parameters may include, but are not limited to: sample-groove-depth parameter 516, sample-groove-spacing parameter 518, inter-groove-height parameter 514, and the like. In at least some embodiments of the present technology, it is contemplated that the given storage (local storage of the electronic device 210 and/or the storage 250) may be configured to store a plurality of sampled road profiles that are similar to the sampled road profile 510 but which have different values for the respective ones of the plurality of sample parameters.

The electronic device 210 may then be configured to use the current road profile 500 and the sampled road profile 510 for generating "comparison data" indicative of a similarity between the current road profile 500 and the sampled road profile 510. The purpose of generating this comparison data is to determine how similar the height variation of the surface of the current road 404 along its width is to the height variation of the surface of the given road (having road ruts) along its width.

According to the invention, the electronic device 210 is configured to generate comparison data between the current road profile 500 and respective ones of a subset of sampled road profiles from the plurality of sampled road profiles. The subset of sampled road profiles may be selected by the electronic device 210 therefor based on the respective values of the plurality of sample parameters associated therewith. For example, the electronic device 210 may select amongst the plurality of sampled road profiles those sampled road profiles that are associated with different values of a given sample parameter. In one implementation the subset of road profiles that may be used for generating respective comparison data may be associated with different values of the sample-groove-spacing parameter 518, for example, that are within a pre-determined range of values. It should be noted that the electronic device 210 may be configured to process comparison data between the current road profile 500 and respective ones of a subset of sampled road profiles similarly to how the electronic device 210 is configured to process the comparison data between the current road profile 500 and the sampled road profile 512.

According to the invention, the electronic device 210 is configured to execute a computer-implemented relationship evaluation method for comparing the current road profile 500 against the sampled road profile 510. Broadly speaking, a given relationship/dependency evaluation method is performed by the electronic device 210 for in a sense "describing" the degree to which a dataset tends to deviate from another dataset. For example, the electronic device 210 may be configured to input data indicative of the current road profile 500 and of the sampled road profile 510 into a given correlation-type function. In another example, the electronic device 210 may be configured to input data indicative of the current road profile 500 and of the sampled road profile 510 into a given covariation-type function.

It should be noted that the description below will refer to how the electronic device 210 is configured to yield comparison data based on the current road profile 500 and the sampled road profile 510 while employing a given covariation-type function (a covariation-type method). However, it is contemplated that the electronic device 210 may be configured to employ a given correlation-type function (a correlation-type method) for evaluating a relationship between the current road profile 500 and the sampled road profile 510.

For example, as seen in Figure 5, the electronic device 210 executing the computer-implemented covariation-type method may be configured to yield comparison data 550 having a covariation peak 560. The covariation peak 560 has a height 570 and a width 580.

It should be noted that the height 570 of the covariation peak 560 is indicative of how similar depths of the pair of current grooves 502 are to depths of the pair of sampled grooves 512. It should also be noted that the width 580 of the covariation peak 560 may be used as a parameter indicative of how "well" the sampled road profile 510 matches the current road profile 500, such that (i) the smaller the value of the width 580, the larger the similarity between the sampled road profile 510 and the current road profile 500, and (ii) the higher the value of the width 580, the smaller the similarity between the sampled road profile 510 and the current road profile 500.

According to the invention, the electronic device 210 is configured to use the comparison data 550 for detecting the presence of the road ruts 450 on the current road 404.

In one embodiment, the electronic device 210 may be configured to use the height 570 of the covariation peak 560 for determining the presence of the road ruts 450 on the current road 404. For example, the electronic device 210 may be configured to compare the height 570 of the covariation peak 560 against a height threshold value. If the height 570 of the covariation peak 560 is below the height threshold value, the electronic device 210 may determine that the depth of the pair of current grooves 502 is not similar enough to the depth of the pair of sampled grooves 512, and therefore, the pair of current grooves 502 are likely not indicative of the presence of road ruts on the current road 404. If the height 570 of the covariation peak 560 is above the height threshold value, the electronic device 210 may determine that the depth of the pair of current grooves 502 is similar enough to the depth of the pair of sampled grooves 512, and therefore, the pair of current grooves 502 is likely indicative of the presence of the road ruts 450 on the current road 404. It should be noted that the height threshold value may be pre-selected by an operator of the electronic device 210 and may depend on a specific implementation of the present technology.

In an other embodiment, the electronic device 210 may be configured to use the comparison data 550 for determining the position of the road ruts 450 on the current road 404. For example, if the electronic device 210 determines that the height 570 of the covariation peak 560 is above the height threshold value, the electronic device 210 may be configured to compare the width 580 of the covariation peak 560 against a width threshold value. If the height 570 is above the height threshold value, and the width 580 is below the width threshold value, the electronic device 210 may be configured to use *inter alia* the sample parameters of the sampled road profile 510 for determining the position of the road ruts 450 on the current road 404. If the height 570 is above the height threshold value, but the width 580 is above the width threshold value, the electronic device 210 (although having detected presence of the road ruts 450 of the current road 404) may be configured to find an other sampled road profile that would yield a covariation peak that would have a corresponding height that is higher than the height threshold value and a corresponding width that is lower than the width threshold value. In such case, the electronic device 210 may be configured to use *inter alia* the sample parameters of the other sampled road profile for determining the position of the road ruts 450 on the current road 404. The width threshold value may be pre-determined by an operator of the electronic device 210.

In summary it can be said that, in some embodiments of the present technology, the electronic device 210 may be configured to iteratively compare different sample road profiles to the current road profile 500 *via* a covariation-type method until a comparison against a given sample road profile yields a covariation peak having a height above the height threshold value and having a width below the width threshold value. If so, the electronic device 210 may be configured to determine presence of the road ruts 450 on the current road 404, and may use *inter alia* one or more sample parameters associated with the given sample road profile for determining the position of the road ruts 450 on the current road 404.

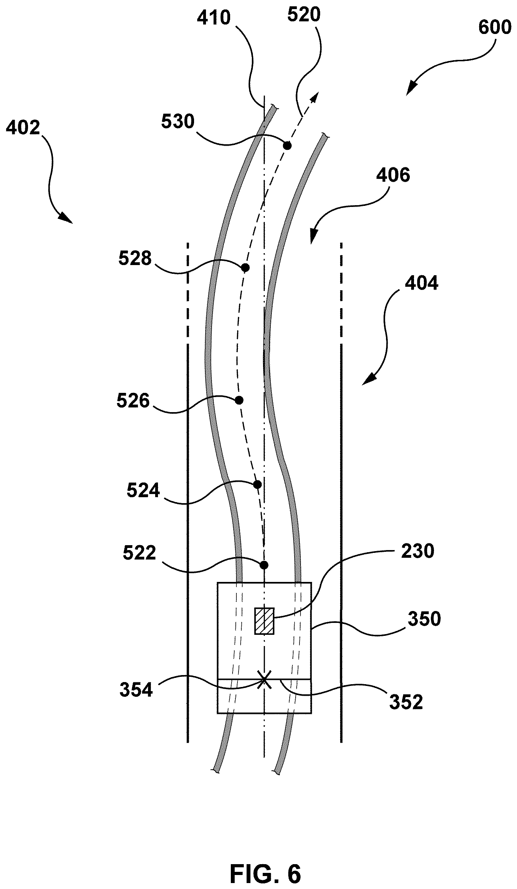

It should be noted that, upon detecting the presence of the road ruts 450 on the current road 404, as explained above, the electronic device 210 is configured to control operation of the vehicle 220 so at to avoid the road ruts 450 on the current road 404. To better illustrate this, reference will now be made to Figure 6 depicting a birds-eye view representation 600 of the vehicle 220 once the presence of the road ruts 450 has been detected on the current road 404.

In Figure 6, there is depicted a modified reference path 520 generated by the electronic device 210 in order to avoid the road ruts 450. As it can be seen, the amended reference path no longer follows the center-line of the current lane 306 so that the amount of time that tires of the vehicle 220 spend in the road ruts 450 is at least reduced during operation of the vehicle 220 in the current lane 306. For example, the electronic device 210 may be configured to determine modified anchor points 522, 524, 526, 528, and 530 such that when the axle midpoint 354 of the vehicle 220 is aligned with any one of the modified anchor points, the tires of the vehicle 220 are not located with the road ruts 450.

It is also contemplated that the electronic device 210 may be configured to generate a modified trajectory for the vehicle 220 in order to actually follow the modified reference path 520. It can be said that modified trajectory data to be used for controlling operation of the vehicle 220 may allow the vehicle 220 to follow the modified trajectory in the current lane 406 that is not aligned with the center-line 410 of the current lane 406.

In other embodiments of the present technology, it is contemplated that upon detecting the presence of the road ruts 450 on the current road 404, the electronic device 210 may be configured to perform different actions for increasing safety of passengers of the vehicle 220.

In some embodiments, the storage 250 (and/or a local storage of the electronic device 210) may be configured to store a given table indicative of a list of safety threshold speeds associated with respective depths of road ruts. For example, for road ruts that are 2 mm deep, a corresponding safety threshold speed may be 110 km/h. This means that travelling at a speed that is higher than 110 km/h on a current road having road ruts of 2 mm deep is unsafe. In another example, for road ruts that are 6 mm deep, a corresponding safety threshold speed may be 60 km/h. This means that travelling at a speed that is higher than 60 km/h on a current road having road ruts of 6 mm deep is unsafe.

Hence, in some embodiments of the present technology, upon detecting the presence of road ruts 450 on the current road 404, the electronic device 210 may be configured to determine the depth of the road ruts on the current road 404 based on at least one of (i) the depths of the pair of current grooves 502, and (ii) the height of the covariation peak 560. The electronic device 210 may also access the given table for retrieving a corresponding safety threshold speed for the determined depth of the road ruts 450. The electronic device 210 may also retrieve a current speed of the vehicle 220 and may compare the current speed of the vehicle 220 against the corresponding safety threshold speed retrieved from the given table. In response to the current speed being above the corresponding safety threshold speed, the electronic device 210 may be configured to control operation of the vehicle 220 so as to at least one of (i) reduce the current speed of the vehicle 220 below the corresponding threshold speed, and (ii) perform a lane-changing manoeuvre if the current road 404 has an other lane.

In yet a further embodiment of the present technology, the electronic device 210 may be configured to use the corresponding safety threshold speed retrieved from the given table in other ways. For example, the electronic device 210 may be configured to follow the default/current reference path 420 in the current lane 406, but generate the modified trajectory for the vehicle 220 so as to actually follow the default/current reference path 420 without exceeding the corresponding safety threshold. In another example, the electronic device 210 may be configured to generate the modified reference path 520, and generate based thereon the modified trajectory for the vehicle 220 for actually following the modified reference path 520 without exceeding the corresponding safety threshold speed.

In some embodiments of the present technology, the electronic device 210 may be configured to execute a method 700 of detecting presence of ruts on a current terrain. The method 700 will now be described in greater details.

### STEP 702: using the sensor data for generating a current terrain profile

The method 700 begins at step 702 with the electronic device 210 configured to use sensor data (e.g., acquired from the sensor system 230) for generating a given current terrain profile.

With reference to Figure 4, there is depicted the current terrain 402 having the current road 404. The current road 404 has the current lane 406 in which the vehicle 220 is travelling. The electronic device 210 may be configured to acquire the sensor data and/or additional data, as explained above, for generating a simulated representation of the current road 404

As part of the step 702, the electronic device 210 is configured to acquire the sensor data from the sensor system 230. For example, the electronic device 210 may be configured to acquire the sensor data from a LIDAR-based sensor. It is contemplated that the sensor data from the LIDAR-based sensor may include point-cloud data indicative of at least the surface of the current road 404.

According to the invention, the electronic device 210 is configured to process the sensor data for generating the current road profile 500 depicted on Figure 5 for the current road 404. The current road profile 500 is a representation of a height variation of the surface of the current road 404 along its width. It is contemplated that the current road profile 500 has the pair of current grooves 502 potentially indicative of the presence of the road ruts 450 on the current road 404.

In at least some embodiments, the electronic device 210 may be configured to apply a RANSAC algorithm onto the point-cloud data for generating the current road profile 500.

### STEP 704: acquiring, from a storage, a sampled terrain profile

The method 700 continues to step 704 with the electronic device 210 configured to acquire from local and/or remote storage a given sampled terrain profile. The given terrain is a given road and the given sampled terrain profile may be a given sampled road profile. With reference to Figure 5, there is depicted the sampled road profile 510 that represents a height variation of a surface of a given road along its width and where the given road is *apriori* known to have respective road ruts. It is contemplated that the sampled road profile has the pair of sampled grooves 512 indicative of the presence of the road ruts on the given road.

In some embodiments, it is contemplated that the local and/or remote storage may be configured to store a plurality of sampled road profiles as explained above. For example, the sampled road profiles from the plurality of road profiles may have different spacings between respective pairs of sampled grooves and/or different depths of the respective pairs of sampled grooves. It can be said that the plurality of road profiles are respectively associated with different values of the sample parameters such as, but not limited to: the sample-groove-depth parameter 516, the sample-groove-spacing parameter 518, the inter-groove-height parameter 514, and the like.

### STEP 706: using the current terrain profile and the sampled terrain profile for generating comparison data

The method 700 continues to step 706 with the electronic device 210 configured to use the current terrain profile and the sampled terrain profile for generating comparison data. For example, the electronic device 210 may be configured to use the current road profile 500 and the sampled road profile 510 for generating the comparison data 550 depicted in Figure 5.

It should be noted that in at least some embodiments of the present technology, the electronic device 210 may employ a relationship evaluation method for yielding the comparison data 550. In some embodiments, the electronic device 210 may employ a correlation-type method therefor, while in other embodiments, the electronic device 210 may employ a covariation-type method therefor.

It is contemplated the electronic device 210 may be configured to apply a covariation-type method for comparing the current road profile 500 against the sampled road profile 510 thereby yielding the comparison data 550, where the comparison data 550 includes the covariation peak 560 having the height 570 and the width 580. The height 570 of the covariation peak 560 is indicative of how similar depths of the pair of current grooves 502 are to depths of the pair of sampled grooves 512.

### STEP 708: using the comparison data for detecting the presence of the ruts on the current terrain

The method 700 continues to step 708 with the electronic device 210 configured to use the comparison data of the step 706 for detecting presence of the ruts on the current terrain. For example, the electronic device 210 may use the comparison data 550 for detecting the presence of the road ruts 450 on the current road 404.

It is contemplated that the electronic device 210 may be configured to, as part of the step 708, use the height 570 of the covariation peak 560 for determining the presence of the road ruts 450 on the current road 404.

In further embodiments, the electronic device 210 may further use the comparison data 550 for determining the position of the road ruts 450 on the current road 404. In at least some embodiments, the electronic device 210 may be configured to use the width 580 (part of the comparison data 550) for determining the position of the road ruts 450 on the current road 404. For example, if the width 580 is below the threshold width value, the electronic device 210 may be configured to use (i) the position of the covariation peak 560 from the comparison data 550 in combination with (ii) at least one sample parameter about the sample road profile 510, for determining the position of the road ruts 450 on the current road 404. In one example, the position of the covariation peak 560 may be used in combination with the sample-groove-spacing parameter 518 for determining the position of the road ruts 450 on the current road 404 (e.g., the positions of the road ruts may correspond to (i) position of the covariation peak 560 +/- (ii) half of the value of the sample-groove-spacing parameter 518).

According to the invention, upon detecting the presence of the road ruts 450 on the current road 404, the electronic device 210 may be configured to control operation of the vehicle 220 so as to avoid the road ruts 450 on the current road 404.

For example, with reference to both Figures 3 and 6, to control the operation of the vehicle 220, the electronic device 210 may be configured to modify at least one of the current reference path 320 and the current trajectory of the vehicle 220 on the current road 404, thereby generating at least one of the respective modified reference path 520 and the respective modified trajectory for the vehicle 220 on the current road 404. As it can bee seen, the current reference path 320 (and the current trajectory) of the vehicle 220 on the current road 404 is aligned with the center-line 410 of the current road 404. The modified reference path 520 (and the modified trajectory) of the vehicle 220 on the current road 404 is not aligned with the center-line 410 of the current road 404 so as to avoid the road ruts 450 on the current road 404.

In some embodiments, upon detecting the presence of the road ruts 450 on the current road 404, the electronic device 210 may be configured to determine the depth of the road ruts 450 on the current road 404 based on the height 570 of the covariation peak 560. The electronic device 210 may then access from the storage a given table indicative of safety threshold speed associated with the depth of the road ruts 450. The electronic device 210 may acquire a current speed of the vehicle 220. The electronic device 210 may, in response to the current speed being determined by the electronic device 210 to be above the safety threshold speed, control operation of the vehicle 220 so at to reduce the current speed of the vehicle, and/or perform a lane-changing maneuver if the current road has more than one lane.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method (700) of detecting presence of road ruts (450) caused by vehicle traffic on current road (404), a Self-Driving Car, SDC, (220) travelling on the current road (404), the SDC (220) being associated with a sensor and an electronic device (210), the sensor being configured to generate sensor data, the sensor data being indicative of at least a surface of the current road (404) , the method (700) executable by the electronic device (210), the method (700) comprising:
• using, by the electronic device (210), the sensor data for generating a current road profile (500) of the current road (404),
the current road profile (500)representing a height variation of the surface of the current road (404) along its width,
the current road profile (500)having a pair of current grooves potentially indicative of the presence of the road ruts (450) on the current road (404);
• acquiring, by the electronic device (210) from a storage (250), a sampled road profile (510),
the sampled road profile (510) representing a height variation of a surface of a given road along its width,
the sampled road profile (510) having a pair of sampled grooves indicative of a presence of the road ruts (450) on the given road;
• using, by the electronic device (210), the current road profile (500)and the sampled road profile (510) for generating comparison data,
the comparison data being indicative of a similarity between the current road profile (500) and the sampled road profile (510); and
• using, by the electronic device (210), the comparison data for detecting the presence of the road ruts on the current road (404);
• upon detecting the presence of the road ruts (450) on the current road (404):
∘ controlling, by the electronic device (210), operation of the SDC (220) so as to avoid the road ruts (450) on the current road (404).

2. The method (700) of claim 1, wherein the method (700) is executed during operation of the SDC (220).

3. The method (700) of claim 1 or claim 2, wherein the sensor is a LIDAR sensor, and wherein the sensor data includes point-cloud data indicative of at least the surface of the current road (404).

4. The method (700) of claim 3, wherein the using the sensor data for generating the current road profile (500) comprises:
• applying, by the electronic device (210), a RANSAC algorithm onto the point-cloud data for generating the current road profile (500).

5. The method (700) of any of claims 1-4, wherein the storage (250) is configured to store a plurality of sampled road profiles (510),
the sampled road profiles (510) from the plurality of road profiles having at least one of:
i. different spacings between respective pairs of sampled grooves; and
ii. different depths of the respective pairs of sampled grooves.

6. The method (700) of any of claims 1-5, wherein the using the current road profile (500) and the sampled road profile (510) for generating the comparison data comprises:
• applying, by the electronic device (210), a relationship evaluation method for comparing the current road profile (500) against the sampled road profile (510) thereby yielding the comparison data.

7. The method (700) of claim 6, wherein the relationship evaluation method is a correlation-type method.

8. The method (700) of claim 6, wherein the relationship evaluation method is a covariation-type method.

9. The method (700) of claim 8, wherein the comparison data includes a covariation peak having a height,
the height of the covariation peak being indicative of how similar depths of the pair of current grooves are to depths of the pair of sampled grooves, and optionally wherein the using the comparison data for detecting the presence of the road ruts (450) on the current road (404) comprises:
• using, by the electronic device (210), the height of the covariation peak for determining the presence of the road ruts (450) on the current road.

10. The method (700) of claim 1, wherein the controlling the operation of the SDC (220) so as to avoid the road ruts (450) on the current road (404) comprises:
• modifying, by the electronic device (210), at least one of a current reference path and a current trajectory of the SDC (220) on the current road, thereby generating at least one of a respective modified reference path and a respective modified trajectory for the SDC (220) on the current road (404),
the current reference path and the current trajectory of the SDC (220) on the current road (404) being aligned with a center-line of the current road (404),
the modified reference path and the modified trajectory of the SDC (220) on the current road (404) not being aligned with the center-line of the current road (404) so as to avoid the road ruts (450) on the current road (404).

11. The method (700) of claim 9, wherein the method (700) further comprises, upon detecting the presence of the road ruts (450) on the current road (404):
• determining, by the electronic device (210), depth of the road ruts (450) on the current road (404) based on the height of the covariation peak;
• accessing, by the electronic device (210) from the storage, a table indicative of a safety threshold speed associated with the depth of the road ruts (450);
• acquiring, by the electronic device (210), a current speed of the SDC (220);
• in response to the current speed being above the safety threshold speed,
controlling, by the electronic device (210), operation of the SDC (220) so as to at least one of:
i. reduce the current speed of the vehicle, and
ii. perform a lane-changing manoeuvre if the current road (404) has more than one lane.

12. The method (700) of claim 9, wherein the method (700) further comprises, upon detecting the presence of the road ruts (450) on the current road (404):
• using, by the electronic device (210), the comparison data for determining position of the road ruts (450) on the current road (404);
• using, by the electronic device (210), the position of the road ruts (450) for modifying at least one of a current reference path and a current trajectory of the SDC (220) on the current road (404) thereby generating at least one of a respective modified reference path and a modified trajectory for the SDC (220) on the current road (404),
the current reference path and the current trajectory of the SDC (220) on the current road (404) being aligned with a center-line of the current road (404),
the modified reference path and the modified trajectory of the SDC (220) on the current road (404) not being aligned with the center-line of the current road such that wheel position of the SDC (220) do not correspond to the position of the road ruts (450) on the current road (404).

13. An electronic device (210) for detecting presence of road ruts (450) caused by vehicle traffic on current road (404), a Self-Driving Car, SDC, (220) travelling on the current road (404), the SDC (220) being associated with a sensor, the sensor being configured to generate sensor data, the sensor data being indicative of at least a surface of the current road (404), the electronic device (210) being configured to:
• use the sensor data for generating a current road profile (500) of the current road (404), the current road profile (500) representing a height variation of the surface of the current road (404) along its width,
the current road profile (500) having a pair of current grooves potentially indicative of the presence of the road ruts (450) on the current road (404);
• acquire, from a storage, a sampled road profile (510),
the sampled road profile (510) representing a height variation of a surface of a given road along its width,
the sampled road profile (510) having a pair of sampled grooves indicative of a presence of the road ruts on the given road;
• use the current road profile (500) and the sampled road profile (510) for generating comparison data,
the comparison data being indicative of a similarity between the current road profile (500) and the sampled road profile (510); and
• use the comparison data for detecting the presence of the road ruts on the currentroad (404);
• upon detecting the presence of the road ruts (450) on the current road (404):
∘ control operation of the SDC (220) so as to avoid the road ruts (450) on the current road (404).

## Patentansprüche

1. Verfahren (700) zum Erkennen des Vorhandenseins von Spurrinnen (450), die durch den Fahrzeugverkehr auf der aktuellen Straße (404) verursacht wurden, wobei ein selbstfahrendes Fahrzeug, SDC, (220) auf der aktuellen Straße (404) fährt, wobei das SDC (220) einem Sensor und einer elektronischen Vorrichtung (210) zugeordnet ist, wobei der Sensor ausgelegt ist, Sensordaten zu erzeugen, wobei die Sensordaten auf mindestens eine Oberfläche der aktuellen Straße (404) hinweisen, wobei das Verfahren (700) durch die elektronische Vorrichtung (210) ausführbar ist, wobei das Verfahren (700) umfasst:
• Verwenden, durch die elektronische Vorrichtung (210), der Sensordaten zur Erzeugung eines aktuellen Straßenprofils (500) der aktuellen Straße (404),
wobei das aktuelle Straßenprofil (500) eine Höhenvariation der Oberfläche der aktuellen Straße (404) entlang ihrer Breite darstellt,
wobei das aktuelle Straßenprofil (500) ein Paar von aktuellen Rillen aufweist, die potentiell auf das Vorhandensein der Spurrinnen (450) auf der aktuellen Straße (404) hinweisen;
• Erfassen, durch die elektronische Vorrichtung (210) von einem Speicher (250), eines abgetasteten Straßenprofils (510),
wobei das abgetastete Straßenprofil (510) eine Höhenvariation der Oberfläche der aktuellen Straße entlang ihrer Breite darstellt,
wobei das abgetastete Straßenprofil (510) ein Paar von abgetasteten Rillen aufweist, die auf das Vorhandensein der Spurrinnen (450) auf der aktuellen Straße hinweisen;
• Verwenden, durch die elektronische Vorrichtung (210), des aktuellen Straßenprofils (500) und des abgetasteten Straßenprofils (510) zum Erzeugen von Vergleichsdaten, wobei die Vergleichsdaten auf eine Ähnlichkeit zwischen dem aktuellen Straßenprofil (500) und dem abgetasteten Straßenprofil (510) hinweisen; und
• Verwenden, durch die elektronische Vorrichtung (210), der Vergleichsdaten zum Erfassen des Vorhandenseins der Spurrinnen auf der aktuellen Straße (404);
• beim Erkennen des Vorhandenseins der Spurrinnen (450) auf der aktuellen Straße (404):
∘ Steuern, durch die elektronische Vorrichtung (210), des Betriebs des SDC (220), um die Spurrinnen (450) auf der aktuellen Straße (404) zu vermeiden.

2. Verfahren (700) nach Anspruch 1, wobei das Verfahren (700) während des Betriebs des SDC (220) ausgeführt wird.

3. Verfahren (700) nach Anspruch 1 oder Anspruch 2, wobei der Sensor ein LIDAR-Sensor ist und wobei die Sensordaten Punktwolkendaten beinhalten, die auf zumindest die Oberfläche der aktuellen Straße (404) hinweisen.

4. Verfahren (700) nach Anspruch 3, wobei das Verwenden der Sensordaten zum Erzeugen des aktuellen Straßenprofils (500) umfasst:
• Anwenden, durch die elektronische Vorrichtung (210), eines RANSAC-Algorithmus auf der Punktwolkendaten zum Erzeugen des aktuellen Straßenprofils (500).

5. Verfahren (700) nach einem der Ansprüche 1-4, wobei der Speicher (250) ausgelegt ist, um eine Vielzahl von abgetasteten Straßenprofilen (510) zu speichern,
wobei die abgetasteten Straßenprofile (510) aus der Vielzahl von Straßenprofilen mindestens eines der Folgenden aufweisen:
i. unterschiedliche Abstände zwischen jeweiligen Paaren von abgetasteten Rinnen; und
ii. unterschiedliche Tiefen der jeweiligen Paare von abgetasteten Rinnen.

6. Verfahren (700) nach einem der Ansprüche 1-5, wobei das Verwenden des aktuellen Straßenprofils (500) und des abgetasteten Straßenprofils (510) zum Erzeugen der Vergleichsdaten Folgendes umfasst:
• Anwenden, durch die elektronische Vorrichtung (210), eines Beziehungsbewertungsverfahrens zum Vergleichen des aktuellen Straßenprofils (500) mit dem abgetasteten Straßenprofil (510), wodurch die Vergleichsdaten erhalten werden.

7. Verfahren (700) nach Anspruch 6, wobei das Beziehungsbewertungsverfahren ein Korrelationstyp-Verfahren ist.

8. Verfahren (700) nach Anspruch 6, wobei das Beziehungsbewertungsverfahren ein Covariationstyp-Verfahren ist.

9. Verfahren (700) nach Anspruch 8, wobei die Vergleichsdaten einen Covariationspeak mit einer Höhe umfassen,
wobei die Höhe des Covariationspeaks darauf hinweist, wie ähnlich die Tiefen des Paars von aktuellen Rinnen den Tiefen des Paars von abgetasteten Rinnen sind, und wobei gegebenenfalls das Verwenden der Vergleichsdaten zum Erfassen des Vorhandenseins der Spurrinnen (450) auf der aktuellen Straße (404) Folgendes umfasst:
• Verwenden, durch die elektronische Vorrichtung (210), der Höhe des Covariationspeaks zum Bestimmen des Vorhandenseins der Spurrinnen (450) auf der aktuellen Straße.

10. Verfahren (700) nach Anspruch 1, wobei das Steuern des Betriebs des SDC (220), um die Spurrinnen (450) auf der aktuellen Straße (404) zu vermeiden, Folgendes umfasst:
• Modifizieren, durch die elektronische Vorrichtung (210), von mindestens einem von einem aktuellen Referenzpfad und einer aktuellen Trajektorie des SDC (220) auf der aktuellen Straße, wodurch mindestens einer von einem jeweiligen modifizierten Referenzpfad und einer jeweiligen modifizierten Trajektorie für das SDC (220) auf der aktuellen Straße (404) erzeugt wird,
wobei der aktuelle Referenzpfad und die aktuelle Trajektorie des SDC (220) auf der aktuellen Straße (404) mit einer Mittellinie der aktuellen Straße (404) ausgerichtet sind,
wobei der modifizierte Referenzpfad und die modifizierte Trajektorie des SDC (220) auf der aktuellen Straße (404) nicht mit der Mittellinie der aktuellen Straße (404) ausgerichtet sind, um die Spurrinnen (450) auf der aktuellen Straße (404) zu vermeiden.

11. Verfahren (700) nach Anspruch 9, wobei das Verfahren (700) ferner beim Erkennen des Vorhandenseins der Spurrinnen (450) auf der aktuellen Straße (404) Folgendes umfasst:
• Bestimmen, durch die elektronische Vorrichtung (210), der Tiefe der Spurrinnen (450) auf der aktuellen Straße (404) auf Grund der Höhe des Covariationspeaks;
• Zugreifen, durch die elektronische Vorrichtung (210) aus dem Speicher, auf eine Tabelle, die auf eine Sicherheitsschwellengeschwindigkeit hinweist, die der Tiefe der Spurrinnen (450) zugeordnet ist;
• Erfassen, durch die elektronische Vorrichtung (210), einer aktuellen Geschwindigkeit des SDC (220);
• als Reaktion darauf, dass die aktuelle Geschwindigkeit über der Sicherheitsschwellengeschwindigkeit liegt,
Steuern, durch die elektronische Vorrichtung (210), des Betriebs des SDC (220), um mindestens eines von den Folgenden auszuführen:
i. die aktuelle Geschwindigkeit des Fahrzeugs reduzieren und
ii. ein Spurwechselmanöver durchzuführen, wenn die aktuelle Straße (404) mehr als eine Fahrspur aufweist.

12. Verfahren (700) nach Anspruch 9, wobei das Verfahren (700) ferner beim Erkennen des Vorhandenseins der Spurrinnen (450) auf der aktuellen Straße (404) Folgendes umfasst:
• Verwenden, durch die elektronische Vorrichtung (210), der Vergleichsdaten zum Bestimmen der Lage der Spurrinnen (450) auf der aktuellen Straße (404);
• Verwenden, durch die elektronische Vorrichtung (210), der Lage von Spurrinnen (450) zum Modifizieren von mindestens einem von einem aktuellen Referenzpfad und einer aktuellen Trajektorie des SDC (220) auf der aktuellen Straße (404), wodurch mindestens einer von einem jeweiligen modifizierten Referenzpfad und einer modifizierten Trajektorie für das SDC (220) auf der aktuellen Straße (404) erzeugt wird,
wobei der aktuelle Referenzpfad und die aktuelle Trajektorie des SDC (220) auf der aktuellen Straße (404) mit einer Mittellinie der aktuellen Straße (404) ausgerichtet sind,
wobei der modifizierte Referenzpfad und die modifizierte Trajektorie des SDC (220) auf der aktuellen Straße (404) nicht mit der Mittellinie der aktuellen Straße ausgerichtet sind, so dass die Radlage des SDC (220) nicht der Lage der Spurrinnen (450) auf der aktuellen Straße (404) entspricht.

13. Elektronische Vorrichtung (210) zum Erkennen des Vorhandenseins von Spurrinnen (450), die durch den Fahrzeugverkehr auf der aktuellen Straße (404) verursacht wurden, wobei ein selbstfahrendes Fahrzeug, SDC, (220) auf der aktuellen Straße (404) fährt, wobei das SDC (220) einem Sensor zugeordnet ist, wobei der Sensor ausgelegt ist, Sensordaten zu erzeugen, wobei die Sensordaten auf mindestens eine Oberfläche der aktuellen Straße (404) hinweisen, wobei die elektronische Vorrichtung (210) ausgelegt ist zum:
• Verwenden der Sensordaten zum Erzeugen eines aktuellen Straßenprofils (500) der aktuellen Straße (404), wobei das aktuelle Straßenprofil (500) eine Höhenvariation der Oberfläche der aktuellen Straße (404) entlang ihrer Breite darstellt,
wobei das aktuelle Straßenprofil (500) ein Paar von aktuellen Rillen aufweist, die potentiell auf das Vorhandensein der Spurrinnen (450) auf der aktuellen Straße (404) hinweisen;
• Erfassen eines abgetasteten Straßenprofils (510) aus einem Speicher,
wobei das abgetastete Straßenprofil (510) eine Höhenvariation der Oberfläche der aktuellen Straße entlang ihrer Breite darstellt,
wobei das abgetastete Straßenprofil (510) ein Paar von abgetasteten Rillen aufweist, die auf das Vorhandensein der Spurrinnen auf der aktuellen Straße hinweisen;
• Verwenden des aktuellen Straßenprofils (500) und des abgetasteten Straßenprofils (510) zum Erzeugen von Vergleichsdaten,
wobei die Vergleichsdaten auf eine Ähnlichkeit zwischen dem aktuellen Straßenprofil (500) und dem abgetasteten Straßenprofil (510) hinweisen; und
• Verwenden der Vergleichsdaten zum Erfassen des Vorhandenseins der Spurrinnen auf der aktuellen Straße (404);
• beim Erkennen des Vorhandenseins der Spurrinnen (450) auf der aktuellen Straße (404):
∘ Steuern des Betriebs des SDC (220), um die Spurrinnen (450) auf der aktuellen Straße (404) zu vermeiden.

## Revendications

1. Procédé (700) de détection de la présence d'ornières de route (450) provoquées par le trafic automobile sur une route actuelle (404), une voiture autonome, SDC, (220) se déplaçant sur la route actuelle (404), la SDC (220) étant associée à un capteur et à un dispositif électronique (210), le capteur étant configuré pour générer des données de capteur, les données de capteur étant indicatives d'au moins une surface de la route actuelle (404), le procédé (700) pouvant être exécuté par le dispositif électronique (210), le procédé (700) comprenant:
• l'utilisation, par le dispositif électronique (210), des données de capteur pour générer un profil de route actuel (500) de la route actuelle (404),
le profil de route actuel (500) représentant une variation de hauteur de la surface de la route actuelle (404) le long de sa largeur,
le profil de route actuel (500) ayant une paire de rainures actuelles indiquant potentiellement la présence des ornières de route (450) sur la route actuelle (404);
• l'acquisition, par le dispositif électronique (210) à partir d'une mémoire (250), d'un profil de route échantillonné (510),
le profil de route échantillonné (510) représentant une variation de hauteur d'une surface d'une route donnée le long de sa largeur,
le profil de route échantillonné (510) ayant une paire de rainures échantillonnées indiquant la présence des ornières de route (450) sur la route donnée;
• l'utilisation, par le dispositif électronique (210), du profil de route actuel (500) et du profil de route échantillonné (510) pour générer des données de comparaison, les données de comparaison étant indicatives d'une similarité entre le profil de route actuel (500) et le profil de route échantillonné (510); et
• l'utilisation, par le dispositif électronique (210), des données de comparaison pour détecter la présence des ornières de route sur la route actuelle (404);
• lors de la détection de la présence des ornières de route (450) sur la route actuelle (404):
∘ la commande, par le dispositif électronique (210), du fonctionnement de la SDC (220) afin d'éviter les ornières de route (450) sur la route actuelle (404).

2. Procédé (700) selon la revendication 1, dans lequel le procédé (700) est exécuté pendant le fonctionnement de la SDC (220).

3. Procédé (700) selon la revendication 1 ou la revendication 2, dans lequel le capteur est un capteur LIDAR, et dans lequel les données de capteur comprennent des données de nuage de points indicatives d'au moins de la surface de la route actuelle (404).

4. Procédé (700) selon la revendication 3, dans lequel l'utilisation des données de capteur pour générer le profil de route actuel (500) comprend:
• l'application, par le dispositif électronique (210), d'un algorithme RANSAC sur les données de nuage de points pour générer le profil de route actuel (500).

5. Procédé (700) selon l'une quelconque des revendications 1 à 4, dans lequel la mémoire (250) est configurée pour stocker une pluralité de profils de route échantillonnés (510),
les profils de route échantillonnés (510) à partir de la pluralité de profils de route ayant au moins l'un parmi des:
i. espacements différents entre des paires respectives de rainures échantillonnées; et
ii. différentes profondeurs des paires respectives de rainures échantillonnées.

6. Procédé (700) selon l'une quelconque des revendications 1 à 5, dans lequel l'utilisation du profil de route actuel (500) et du profil de route échantillonné (510) pour générer les données de comparaison comprend:
• l'application, par le dispositif électronique (210), d'un procédé d'évaluation de relation pour comparer le profil de route actuel (500) avec le profil de route échantillonné (510), produisant ainsi les données de comparaison.

7. Procédé (700) selon la revendication 6, dans lequel le procédé d'évaluation de relation est un procédé de type à corrélation.

8. Procédé (700) selon la revendication 6, dans lequel le procédé d'évaluation de relation est un procédé de type à covariation.

9. Procédé (700) selon la revendication 8, dans lequel les données de comparaison comprennent une valeur maximale de covariation ayant une hauteur,
la hauteur de la valeur maximale de covariation étant indicative de la similarité des profondeurs de la paire de rainures actuelles à des profondeurs de la paire de rainures échantillonnées, et éventuellement dans lequel l'utilisation des données de comparaison pour détecter la présence des ornières de route (450) sur la route actuelle (404) comprend:
• l'utilisation, par le dispositif électronique (210), de la hauteur de la valeur maximale de covariation pour déterminer la présence des ornières de route (450) sur la route actuelle.

10. Procédé (700) selon la revendication 1, dans lequel la commande du fonctionnement de la SDC (220) afin d'éviter les ornières de route (450) sur la route actuelle (404) comprend:
• la modification, par le dispositif électronique (210), d'au moins l'un d'un trajet de référence actuel et d'une trajectoire actuelle de la SDC (220) sur la route actuelle, générant ainsi au moins l'un d'un trajet de référence modifié respectif et d'une trajectoire modifiée respective pour la SDC (220) sur la route actuelle (404),
le trajet de référence actuel et la trajectoire actuelle de la SDC (220) sur la route actuelle (404) étant alignés avec une ligne centrale de la route actuelle (404),
le trajet de référence modifié et la trajectoire modifiée de la SDC (220) sur la route actuelle (404) n'étant pas alignés avec la ligne centrale de la route actuelle (404) afain d'éviter les ornières de route (450) sur la route actuelle (404).

11. Procédé (700) selon la revendication 9, dans lequel le procédé (700) comprend en outre, lors de la détection de la présence des ornières de route (450) sur la route actuelle (404):
• la détermination, par le dispositif électronique (210), de la profondeur des ornières de route (450) sur la route actuelle (404) sur la base de la hauteur de la valeur maximale de covariation;
• l'accès, par le dispositif électronique (210) à partir de la mémoire, à un tableau indicatif d'une vitesse seuil de sécurité associée à la profondeur des ornières de route (450);
• l'acquisition, par le dispositif électronique (210), d'une vitesse actuelle de la SDC (220);
• en réponse au fait que la vitesse actuelle est supérieure à la vitesse seuil de sécurité, la commande, par le dispositif électronique (210), du fonctionnement de la SDC (220) afin de faire au moins l'un parmi les suivants:
i. réduire la vitesse actuelle du véhicule, et
ii. effectuer une manœvre de changement de voie si la route actuelle (404) a plus d'une voie.

12. Procédé (700) selon la revendication 9, dans lequel le procédé (700) comprend en outre, lors de la détection de la présence des ornières de route (450) sur la route actuelle (404):
• l'utilisation, par le dispositif électronique (210), des données de comparaison pour déterminer la position des ornières de route (450) sur la route actuelle (404);
• l'utilisation, par le dispositif électronique (210), de la position des ornières de route (450) pour modifier au moins l'un d'un trajet de référence actuel et d'une trajectoire actuelle de la SDC (220) sur la route actuelle (404), générant ainsi au moins l'un d'un trajet de référence modifié respectif et d'une trajectoire modifiée pour la SDC (220) sur la route actuelle (404),
le trajet de référence actuel et la trajectoire actuelle de la SDC (220) sur la route actuelle (404) étant alignés avec une ligne centrale de la route actuelle (404),
le trajet de référence modifié et la trajectoire modifiée de la SDC (220) sur la route actuelle (404) n'étant pas alignés avec la ligne centrale de la route actuelle de sorte que la position des roues de la SDC (220) ne correspond pas à la position des ornières de route (450) sur la route actuelle (404).

13. Dispositif électronique (210) pour la détection de la présence d'ornières de route (450) provoquées par un trafic automobile sur une route actuelle (404), une voiture autonome, SDC, (220) se déplaçant sur la route actuelle (404), la SDC (220) étant associée à un capteur, le capteur étant configuré pour générer des données de capteur, les données de capteur étant indicatives d'au moins une surface de la route actuelle (404), le dispositif électronique (210) étant configuré pour:
• utiliser les données de capteur pour générer un profil de route actuel (500) de la route actuelle (404), le profil de route actuel (500) représentant une variation de hauteur de la surface de la route actuelle (404) le long de sa largeur,
le profil de route actuel (500) ayant une paire de rainures actuelles indiquant potentiellement la présence des ornières de route (450) sur la route actuelle (404);
• acquérir, à partir d'une mémoire, un profil de route échantillonné (510),
le profil de route échantillonné (510) représentant une variation de hauteur d'une surface d'une route donnée le long de sa largeur,
le profil de route échantillonné (510) ayant une paire de rainures échantillonnées indiquant la présence des ornières de route sur la route donnée;
• utiliser le profil de route actuel (500) et le profil de route échantillonné (510) pour générer des données de comparaison,
les données de comparaison étant indicatives d'une similarité entre le profil de route actuel (500) et le profil de route échantillonné (510); et
• utiliser les données de comparaison pour détecter la présence des ornières de route sur la route actuelle (404);
• lors de la détection de la présence des ornières de route (450) sur la route actuelle (404):
∘ commander le fonctionnement de la SDC (220) afin d'éviter les ornières de route (450) sur la route donnée (404).
